# EUROPEAN PATENT SPECIFICATION

(11) **EP 0 477 564 B1**
(45) Date of publication and mention of the grant of the patent: **11.12.1996**
(21) Application number: 91114425.1
(22) Date of filing: 28.08.1991
(51) Int. Cl.: F16H 61/28

(54) **Electronically controlled transmission**
Elektronisch gesteuertes Getriebe
Transmission à commande électronique

(30) Priority: 31.08.1990 JP 230971/90
(43) Date of publication of application: 01.04.1992
(73) Proprietor: Isuzu Motors Limited, Shinagawa-ku, Tokyo 140 (JP)
(72) Inventor: Kouno, Takao, c/o Isuzu Motors Ltd., Kawasaki-shi, Kanagawa-ken (JP)
(74) Representative: Reinhard - Skuhra - Weise & Partner

(56) References cited:
- EP-A- 0 378 218
- WO-A-86/02112
- GB-A- 2 214 248
- JP-A-63 167 156
- US-A- 4 928 544
- Lorenz, K., Larisch, R.: "Einsatz des Viergang-Automatikgetriebes 4 HP 22 mit elektronsich-hydraulischer Steuerung"; DE-Journal ATZ Automobiltechnische Zeitschrift, Vol. 85, 1983; No. 6, pages 401-405.

## Description

### DETAILED DESCRIPTION OF THE INVENTION

The present invention relates to an electronic-controlled transmission according to the preamble of claim 1.

The European Patent Application no. EP-A-0 378 218 which corresponds thereto describes a motor vehicle with a drive control system which has to avoid that gear shifting and clutch engagement and release are effected fairly sharply. This motor vehicle drive control system employs several detecting means including transducer means detecting the transmission position, a drive shaft speed sensor detecting the speed of the drive shaft, and an oil temperature sensor detecting the temperature of the transmission oil.

In the WO-A-86/02112, a control device for the automatic shifting of staged gear-boxes is described comprising an electronic control unit determining as a function of the speed and the load the gearshifting points with a selective switch in forward and reverse motion. The automatic transmission described therein is combined with a torque converter and planetary gears.

An electronic-controlled automatic transmission has already been put to practical use in which a fluid pressure circuit comprising a clutch actuator for connecting and disconnecting a clutch, and a select actuator and a shift actuator which are connected to a -in general- manually-operated gear transmission is controlled by an output of an electronic control device on the basis of signals of an operating amount of an accelerator pedal, a rotational speed of the engine, a vehicle speed and so on.

In the case of the manually-operated gear transmission, according to the skill of a driver, a transmission lever is rapidly operated with a great force in the transmission of a low-speed stage, whereas a transmission lever is operated with a small force in the transmission of a high-speed stage. Therefore, no excessive load exerts on a transmission mechanism of high-speed state which is relatively weak in terms of strength, thus giving rise to no problem. However, in the case where a transmission operating mechanism is uniformly driven by a common fluid pressure actuator, when a drive force of the actuator is small, it takes time for the shifting operation of the low-speed stage to impair the smooth acceleration of vehicle. Conversely, when the drive force of the actuator is large, an excessive force is applied to the transmission mechanism of the high-speed stage to possibly damage the transmission mechanism.

For solving the aforementioned problems, there has been proposed an electronic-controlled automatic transmission as disclosed in Japanese Patent Application Laid-Open No. 63 (1988) - 167,156 publication, in which an electromagnetic valve inserted into and connected to a drain passage of a pneumatic actuator is closed to reduce a drive force of the pneumatic actuator to prevent a damage of a synchronising mechanism, and after completion of the synchronising operation of the synchronising mechanism, the electromagnetic valve is opened to increase the drive force of the pneumatic actuator, thus attaining the rapid shifting operation. In the aforementioned electronic-controlled automatic transmission, however, the drive force of the pneumatic actuator is not controlled corresponding to the shifting operation of each transmission stage, and particularly in case of using oil pressure as a fluid pressure, the smoothness of the operation is impaired.

In view of the aforementioned problem, an object of the present invention is to provide an electronic-controlled transmission in which in connection with shifting operations (shift operation and shift release) of each transmission stage, a drive force of an actuator is controlled to a proper value so as to obtain a rapid shifting operation while avoiding a damage of a transmission operating mechanism.

This object is achieved by the features defined in claim 1. Further embodiments of the present invention are characterized by the dependent claims.

Further characteristics and advantages of the invention will become apparent from the description made with respect to the following drawings.
Fig. 1 is a structural view of an electronic-controlled transmission according to the present invention;
Fig. 2 is a side sectional view of a proportional electromagnetic type pressure control valve;
Fig. 3 is a characteristic diagram of the proportional electromagnetic type pressure control valve;
Figs. 4 to 7 are diagrams indicative of a current applied to the proportional electromagnetic type pressure control valve and of correction amounts with respect to running conditions; and
Fig. 8 is a flow chart showing programs in which the proportional electromagnetic type pressure control valve and further valves are controlled by the electronic-control device.

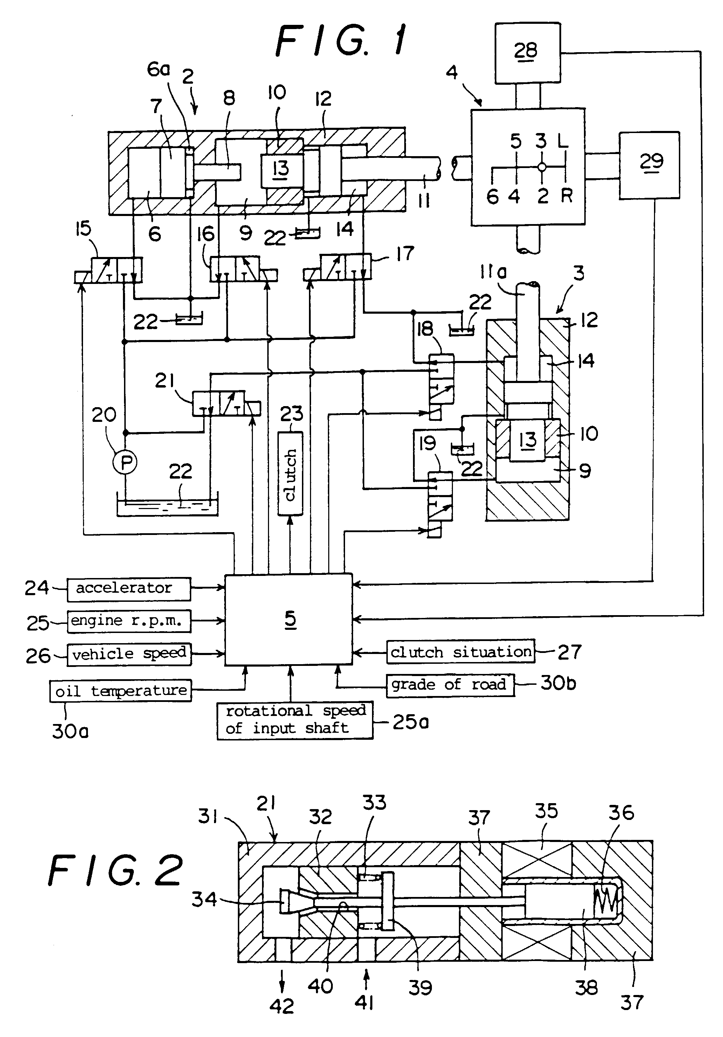

Fig. 1 is a structural view of an electronic-controlled automatic transmission according to the present invention. A six-speed transmission is driven by a select actuator 2 and a shift actuator 3. The select actuator 2 comprises a hollow piston 10 fitted into a large diameter portion of a stepped cylinder 12, a stepped piston 13 having a small diameter portion fitted into the hollow piston 10 and a large diameter portion fitted into a small diameter portion of the stepped cylinder 12, and a rod 11 connected to the stepped piston 13, said rod 11 being connected to a transmission operating mechanism 4.

When pressure oil is supplied to chambers 9 and 14 of the select actuator 2, the transmission operating mechanism 4 is selected to 2-3 stage as shown; when pressure oil is suppplied to the chamber 9, only the stepped piston 13 moves rightward and the mechanism 4 is selected to L-R stage; and when pressure oil is supplied to the chamber 14, the stepped piston 13 moves leftward till it impinges upon a rod 8 and the mechanism 4 is selected to 4-5 stage. A chamber 6 is defined from a chamber 6a in communication with an oil tank 22 by a piston 7 fitted into a further cylinder aligned with the stepped cylinder 12, and the rod 8 coupled to the piston 7 is extended toward the chamber 9. When oil pressure of the chamber 6 is released and pressure oil is supplied to the chamber 14, the rod 8 is pushed leftward by the stepped piston 13, and the transmission operating mechanism 4 is selected to stage-6 by the rod 11. The chambers 6, 9 an 14 of the select actuator 2 can be communicated with a discharge port of a hydraulic pump 20 or the oil tank 22 by first electromagnetic type switching valves 15, 16 and 17, respectively.

The shift actuator 3 is similar to a right half of the select actuator 2, and common members are indicated by common reference numerals, description of which are omitted. A rod 11a coupled to the stepped piston 13 is connected to the transmission operating mechanism 4. The chambers 14 and 9 can be communicated with the discharge port of the hydraulic pump 20 or the oil tank 22, via a proportional electromagnetic type pressure control valve 21 which will be described later, by second electromagnetic type switching valves 18 and 19, respectively.

An electronic-control device 5 comprised of a microcomputer selects transmission stages on the basis of signals of an accelerator sensor 24 for detecting the operating amount of an acceleration pedal, a r.p.m. sensor 25 for detecting the rotational speed of the engine, and a vehicle speed sensor 26 and controls an electromagnetic switching valve (not shown) of a fluid pressure circuit of a clutch actuator for connecting and disconnecting a clutch 23 and controls the first and second electromagnetic type switching valves 15 to19 and a proportional electromagnetic type pressure control valve 21 of the fluid pressure circuit of the transmission operating mechanism. The operation of the clutch actuator, an operating position of the select actuator 2, an operating position of the shift actuator 3, and the operating state of a synchronous mechanism of the transmission are detected by a clutch sensor 27, transmitting position sensors, namely a select sensor 29, a shift sensor 28 and a rotational speed sensor 25a disposed opposedly of an input shaft of the transmission, respectively; and then inputted into the electronic-control device 5. A temperature of oil supplied to the shift actuator 3 is detected by a oil temperature sensor 30a, and a slope or grade of road is detected by a road sensor 30b from an inclination between front and rear portions of the vehicle body and then inputted into the electronic-control device 5.

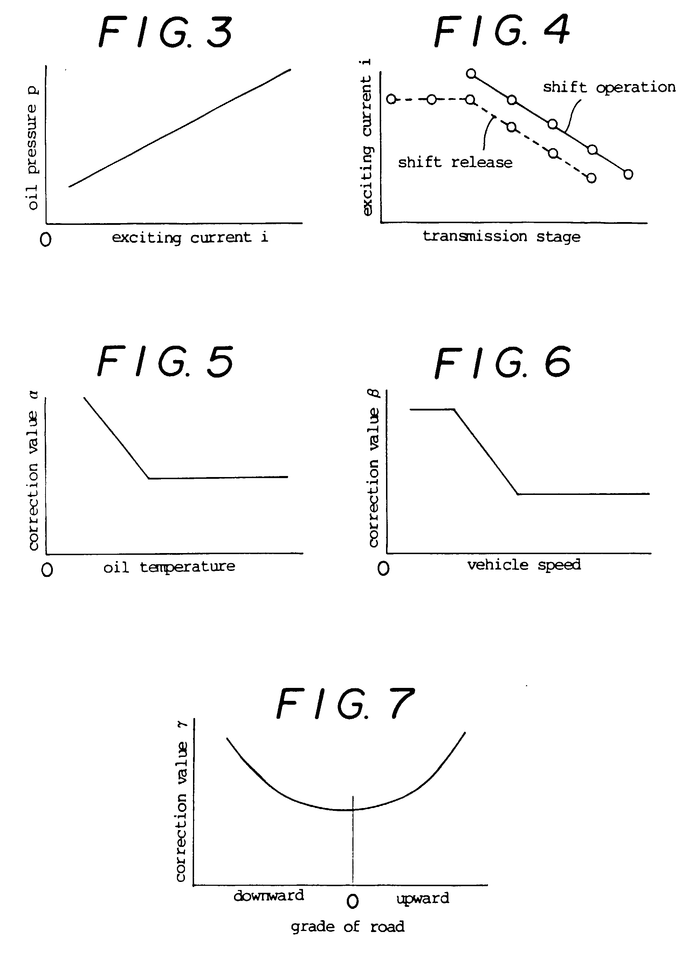

As shown in Fig. 2, in the proportional electromagnetic type pressure control valve 21, a valve seat 32 having a tapered valve passage 40 is fitted and supported internally of a valve housing 31, and a spring 33 is interposed between a spring seat 39 of a stem of a tapered valve body 34 and the valve seat 32. The valve body 34 is movable to and from the valve seat 32 and is connected to a plunger 38 of an electromagnetic actuator comprising an electromagnetic coil 35, yokes 37 and the plunger 38. When the plunger 38 is attracted leftward proportional to an exciting current i applied to the electromagnetic coil 35 and against the force of the spring 33, the valve body 34 is moved away from the valve passage 40, and oil pressure supplied from an inlet 41 to the actuator 3 via the valve passage 40 and an outlet 42 increases (see Fig. 3).

In the present invention, the durable strength of the transmission operating mechanism, particularly the synchronising mechanism of each transmission state is designed according to the transmitted torque so that as shown in Fig. 4, an exciting current i of the proportional electromagnetic type pressure control valve 21 is regulated according to the shift operation and shift release of each transmission stage, oil pressure (see Fig. 3) supplied to the shift actuator 3 is regulated and the drive force of the shift actuator 3 is controlled. In this case, a transmitting position is detected by the select sensor 29 and the shift sensor 28.

Preferably, the drive force of the shift actuator 3 is corrected according to the running conditions. Since when a temperature of working oil is low, an operating resistance of the shift actuator 3 is large, an exciting current i multiplied by a correction value α corresponding to oil temperature is applied to the proportional electromagnetic type pressure control valve 21, as shown in Fig. 5. In order to obtain a smooth and rapid acceleration of vehicle, an exciting current i multiplied by a correction value β corresponding to the vehicle speed is applied to the proportional electromagnetic type pressure control valve 21. In the low speed operation, pressure oil higher than ordinary oil pressure is supplied to the shift actuator 3. Further, as shown in Fig. 7, an exciting current i multiplied by a correction value γ according to the grade of road is applied to the proportional electromagnetic type pressure control valve 21. The larger the road grade, the higher the oil pressure than ordinary oil pressure is supplied to the shift actuator 3.

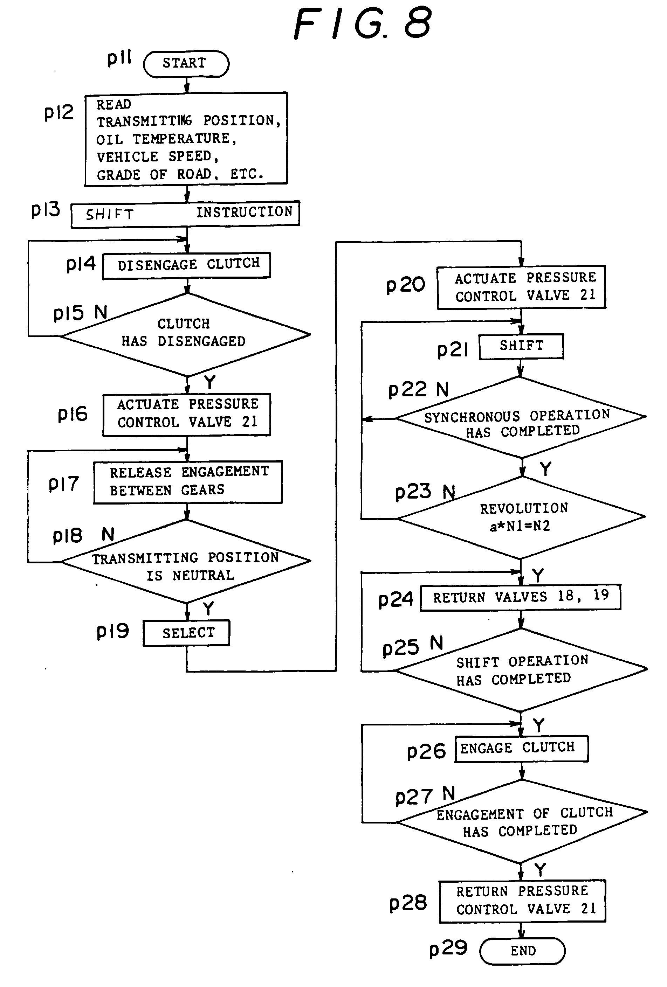

Fig. 8 is a flow chart of programs in which the aforementioned controls are carried out by the electronic-control device 5 comprised of a microcomputer. In Fig. 8, p11 to p29 represent the steps for the programs. The programs are repeatedly executed at predermined times.

At step p11, the program starts. At step p12, a transmitting position is read from the select sensor 29 and the shift sensor 28; and the oil temperature, vehicle speed and road grade are read from the oil temperature sensor 30a, vehicle speed sensor 26 and road sensor 30b, respectively. At step p13, when a change of the transmitting position is required in view of the relation between the engine r.p.m. with respect to the present transmitting position and the operating amount of the acceleration pedal, the optimum transmitting position is obtained from a control map stored and set in advance in ROM, and a transmitting position change instruction is provided. At step p14, the clutch is cut off. At step p15, judgment is made from the signal of the clutch sensor 27 if the clutch is cut off. If the clutch is not cut off, the execution returns to p14.

If the clutch is cut off at step p15, step p16 is executed so that the proportional electromagnetic type pressure control valve 21 is actuated corresponding to the content of transmitting position change instruction at step p13. More specifically, the exciting current corresponding to the present transmitting position, oil temperature, vehicle speed and road grade is obtained from the control map stored and set in advance in ROM and is applied to the proportional electromagnetic type pressure control valve 21 to control oil pressure supplied to the shift actuator 3 via the electromagnetic switching valves 18 and 19. At step p17, one of the second electromagnetic switching valves 18 and 19 is excited and switched to drive the shift actuator 3 and release engagement between gears of the present transmitting position. At step p18, judgement is made if the transmitting position is at a neutral position. If the transmitting position is not in the neutral position, the execution returns to step p17.

If the transmitting position is in the neutral position at step p18, select is made at step p19. More specifically, two or three of the first electromagnetic type switching valves 15, 16 and 17 are excited and switched to drive the select actuator 2. At step p20, the exciting current corresponding to new transmitting position, oil temperature, vehicle speed and road grade is obtained from a control map stored and set in advance in ROM and is applied to the proportional electromagnetic type pressure control valve 21 to control oil pressure supplied to the shift actuator 3 via the second electromagnetic type switching valves 18 and 19. At step p21, one of the second electromagnetic type switching valves 18 and 19 is excited and switched to drive the shift actuator 3. At step p22, judgement is made if synchronous operation of a synchronous mechanism of a predetermined transmission gear (a transmission gear determined at step p13) has been completed. That is, since the number of revolutions of the input shaft of the transmission varies before and after the synchronous operation, the synchronous operation is judged to have been completed when a variation in signal of the rotational speed sensor 25a provided opposedly of the input shaft does not exist (dN/dt=0). If the synchronous operation of the synchronous mechanism of the transmission gear is not completed at step p22, the execution returns to step p21.

If the synchronous operation of the synchronous mechanism of the transmission gear is completed at step p22, judgement is made at step p23 if the vehicle speed assumes a value corresponding to the operating condition of the engine and the transmitting position. More specifically, judgement is made if a value obtained by multiplying the number of revolutions N1 of the input shaft of the transmission by a ratio a of transmission gears is equal to the number of revolutions N2 of the output shaft of the transmission. If the value obtained by multiplying the number of revolutions N1 of the input shaft of the transmission by the ratio a of the transmission gears is not equal to the number of revolutions N2 of the output shaft, the execution returns to step p21.

If the value obtained by multiplying the number of revolutions N1 of the input shaft of the transmission by the ratio a of transmission gears is equal to the number of revolutions N2 of the output shaft at step p23, the electromagnetic switching valves 18 and 19 are returned to the illustrated positions at step p24. At step p25, judgement is made if a shift to a predetermined transmitting position is made by signals of the select sensor 29 and the shift sensor 28. If the shift to a predetermined transmitting position is not made, the execution is returned to step p24.

If the shift to a predetermined transmitting position has been made at step p25, the clutch is connected at step p26. At step p27, judgement is made if the clutch is connected according to the signal of the clutch sensor 27. If the clutch is not connected, the execution returns to step p26. If the clutch is connected, the proportional electromagnetic type pressure control valve 21 is returned to the illustrated open position at step p28, and the program is terminated at step p29.

While the aforementioned embodiments, the case of the electronic-controlled automatic transmission has been described, it is to be noted that the present invention is not limited thereto but the present invention may be also applied to a remote-controlled transmission in which the engine and the transmission are mounted at the rear of a vehicle body, as in a large-sized bus, for example, and a transmission lever at a driver's seat is not mechanically connected to the transmission. In this case, a transmitting position signal selectqd by operating a transmission lever by a driver is additionally fed to the electronic-control device, and the clutch is connected and disconnected by a clutch pedal operated by a driver.

### (Effect of the Invention)

As described above, the proportional electromagnetic type pressure control valve 21 is inserted and connected between the fluid pressure source 22 and the shift actuator 3 for carrying out the shift operation of the transmission, the proportional electromagnetic type pressure control valve 21 being driven by an output of the electronic-control device (5) corresponding to the transmitting position, and the fluid pressure supplied to the shift actuator (3) is controlled corresponding to each transmitting operation. The drive force of the shift actuator 3 applied to the transmission operating mechanism 4 is regulated corresponding to the transmitting operation to each transmitting position, and therefore, an abnormal wear and damage of each synchronous mechanism can be prevented.

Furthermore, since the fluid pressure supplied to the shift actuator 3 is regulated corresponding to the transmitting operation to each transmitting position, a proper drive force is transmitted to the transmission operating mechanism, the transmission is not wasteful with operation time, and smooth and rapid acceleration and deceleration of vehicle is obtained.

## Claims

1. An electronic-controlled transmission for a vehicle comprising a fluid pressure source (22), a select actuator (2) connected to a transmission operating mechanism (4) to carry out the select operation thereof, a shift actuator (3) connected to said transmission operating mechanism (4) to carry out the shift operation thereof, first electromagnetic type valves (15, 16, 17) inserted and connected in a passage communicating said fluid pressure source (22) to said select actuator (2), second electromagnetic type valves (18, 19) inserted and connected in a passage communicating said fluid pressure source (22) to said shift actuator (3), an accelerator sensor (24) for detecting an operating amount of accelerator, an engine r.p.m. sensor (25), a vehicle speed sensor (26) detecting the vehicle speed, transmitting position sensors (28, 29) detecting a transmission stage and a fluid temperature sensor (30a), and an electronic-control device (5) for selecting transmission stages and driving said valves (15, 16, 17) and (18, 19) on basis of signals from said accelerator sensor (24), said engine r.p.m. sensor (25) and said vehicle speed sensor (26),
characterized in that
- a proportional electromagnetic type pressure control valve (21) is inserted and connected in said passage communicating said fluid ressure source (22) to said second valves (18, 19),
- the first electromagnetic type valves (15,16,17) and the second electromagnetic type valves (18,19) are switching valves, and
- said pressure control valve (21) is driven by output signals from said electronic-control device (5) on basis of signals from said fluid temperature sensor (30a) detecting a temperature of fluid supplied to the shift actuator (3), from said vehicle speed sensor (26) and said transmitting position sensor (28, 29) so as to decrease the fluid pressure supplied to said shift actuator (3) when a higher transmission stage, higher vehicle speed or higher temperature of fluid are detected.

2. The electronic-controlled transmission according to claim 1,
characterized in that
said electronic control device (5) is connected to said accelerator sensor (24).

3. The electronic-controlled transmission according to claim 1 or 2,
characterized in that
said electronic control device (5) is connected to said engine r.p.m. sensor (25).

4. The electronic-controlled transmission according to at least one of the preceding claims,
characterized in that
said electronic control device (5) is connected to said vehicle speed sensor (26).

5. The electronic-controlled transmission according to at least one of the preceding claims,
characterized in that
said electronic control device (5) is connected to a clutch sensor (27).

6. The electronic-controlled transmission according to at least one of the preceding claims,
characterized in that
said electronic control device (5) is connected to said fluid temperature sensor (30a).

7. The electronic-controlled transmission according to at least one of the preceding claims,
characterized in that
said electronic control device (5) is connected to a rotational speed sensor (25a).

8. The electronic-controlled transmission according to at least one of the preceding claims,
characterized in that
said electronic control device (5) is connected to a sensor (30b) for detecting the inclination between the front and the rear portions of a vehicle body.

9. The electronic-controlled transmission according to at least one of the preceding claims,
characterized in that
the exciting current of the electromagnetic coil of said pressure control valve (21) is regulated.

10. The electronic-controlled transmission according to at least one of the preceding claims,
characterized in that
the drive force of said shift actuator (3) is corrected according to the detected running conditions.

## Patentansprüche

1. Elektronisch gesteuertes Getriebe für ein Fahrzeug mit einer Fluiddruckquelle (22), einem Gangwahlstellglied (2), das mit einem Getriebebetätigungsmechanismus (4) verbunden ist, um dessen Gangwahlvorgang auszuführen, einem Gangstellglied (3), das mit dem Getriebebetätigungsmechanismus (4) verbunden ist, um dessen Gangschaltvorgang auszuführen, ersten elektromagnetischen Ventilen (15, 16, 17), die in einen Durchlaß eingesetzt und verbunden sind, der die Fluiddruckquelle (22) mit dem Gangschaltstellglied (2) verbindet, zweiten elektromagnetischen Ventilen (18, 19), die in einen Durchlaß eingesetzt und verbunden sind, der die Fluiddruckquelle (22) mit dem Gangstellglied (3) verbindet, einem Gashebelsensor (24) zum Ermitteln eines Betätigungsausmaßes eines Gashebels, einem Motordrehzahlsensor (25), einem Fahrzeuggeschwindigkeitssensor (26), der die Fahrzeuggeschwindigkeit ermittelt, Getriebestellungssensoren (28, 29), die eine Getriebestellung ermitteln, und einem Fluidtemperatursensor (30) und einer elektronischen Steuervorrichtung (5) zum Auswählen von Getriebestellungen und zum Antreiben der Ventile (15, 16, 17) und (18, 19) auf Grundlage von Signalen von dem Beschleunigungssensor (24), dem Motordrehzahlsensor (25) und dem Fahrzeuggeschwindigkeitssensor (26),
dadurch gekennzeichnet, daß
ein elektromagnetisches Proportionaldrucksteuerventil (21) in den Durchlaß eingesetzt ist, der die Fluiddruckquelle (22) mit den zweiten Ventilen (18, 19) verbindet,
- die ersten elektromagnetischen Ventile (15, 16, 17) und die zweiten elektromagnetischen Ventile (18, 19) Schaltventile sind, und
- das Drucksteuerventil (21) durch Ausgangssignale von der elektronischen Steuervorrichtung (5) auf Grundlage von Signalen von dem Fluidtemperatursensor (30a), der eine Temperatur des dem Gangstellglied (3) zugeführten Fluids ermittelt, von dem Fahrzeuggeschwindigkeitssensor (26) und dem Getriebestellungssensor (28, 29) so angetrieben wird, daß es den Fluiddruck verringert, der dem Gangstellglied (3) zugeführt wird, wenn eine höhere Getriebestellung, eine höhere Fahrzeuggeschwindigkeit oder eine höhere Fluidtemperatur ermittelt werden.

2. Elektronisch gesteuertes Getriebe nach Anspruch 1, dadurch gekennzeichnet, daß die elektronische Steuervorrichtung (5) mit dem Gashebelsensor (24) verbunden ist.

3. Elektronisch gesteuertes Getriebe nach Anspruch 1 oder 2, dadurch gekennzeichnet, daß die elektronische Steuervorrichtung (5) mit dem Motordrehzahlsensor (25) verbunden ist.

4. Elektronisch gesteuertes Getriebe nach wenigstens einem der vorangehenden Ansprüche, dadurch gekennzeichnet, daß die elektronische Steuervorrichtung (5) mit dem Fahrzeuggeschwindigkeitssensor (26) verbunden ist.

5. Elektronisch gesteuertes Getriebe nach wenigstens einem der vorangehenden Ansprüche, dadurch gekennzeichnet, daß die elektronische Steuervorrichtung (5) mit einem Kupplungssensor (27) verbunden ist.

6. Elektronisch gesteuertes Getriebe nach wenigstens einem der vorangehenden Ansprüche, dadurch gekennzeichnet, daß die elektronische Steuervorrichtung (5) mit dem Fluidtemperatursensor (30a) verbunden ist.

7. Elektronisch gesteuertes Getriebe nach wenigstens einem der vorangehenden Ansprüche, dadurch gekennzeichnet, daß die elektronische Steuervorrichtung (5) mit einem Drehzahlsensor (25a) verbunden ist.

8. Elektronisch gesteuertes Getriebe nach wenigstens einem der vorangehenden Ansprüche, dadurch gekennzeichnet, daß die elektronische Steuervorrichtung (5) mit einem Sensor (30b) zum Ermitteln der Neigung zwischen den vorderen und hinteren Abschnitten einer Fahrzeugkarosserie verbunden ist.

9. Elektronisch gesteuertes Getriebe nach wenigstens einem der vorangehenden Ansprüche, dadurch gekennzeichnet, daß der Erregerstrom der elektromagnetischen Spule des Drucksteuerventils (21) geregelt ist.

10. Elektronisch gesteuertes Getriebe nach wenigstens einem der vorangehenden Ansprüche, dadurch gekennzeichnet, daß die Antriebskraft des Gangstellglieds (3) in Übereinstimmung mit den ermittelten Fahrbedingungen korrigiert wird.

## Revendications

1. Transmission à commande électronique pour un véhicule, comprenant une source de pression de fluide (22), un actionneur de sélection (2) relié à un mécanisme de manoeuvre de transmission (4) pour effectuer l'opération de sélection de celui-ci, un actionneur de changement de rapport (3) relié audit mécanisme de manoeuvre de transmission (4) pour effectuer l'opération de son changement de rapport, des premières vannes de type électromagnétique (15, 16, 17) insérées et reliées dans un passage faisant communiquer ladite source de pression de fluide (22) audit actionneur de sélection (2), des deuxièmes vannes de type électromagnétique (18, 19) insérées et reliées dans un passage faisant communiquer ladite source de pression de fluide (22) audit actionneur de changement de rapport (3), un capteur d'accélérateur (24) pour détecter une valeur de fonctionnement d'un accélérateur, un capteur de vitesse de rotation de moteur (25), un capteur de vitesse de véhicule (26) détectant la vitesse du véhicule, des capteurs de position de transmission (28, 29) détectant un rapport de transmission, un capteur de température de fluide (30a), et un dispositif électronique de commande (5) pour sélectionner des étages de transmission et commander lesdites valves (15, 16, 17 et 18, 19) sur la base de signaux provenant dudit capteur d'accélérateur (24), dudit capteur de vitesse de rotation de moteur (25) et dudit capteur de vitesse de véhicule (26),
caractérisée en ce que
- une vanne de commande de pression de type électromagnétique proportionnel (21) est insérée et reliée dans ledit passage faisant communiquer ladite source de pression de fluide (22) auxdites deuxièmes vannes (18, 19), les premières vannes de type électromagnétique (15, 16, 17) et les deuxièmes vannes de type électromagnétique (18, 19) sont des vannes de commutation, et
- ladite vanne de commande de pression (21) est commandée par des signaux de sortie provenant dudit dispositif électronique de commande (5) sur la base de signaux provenant dudit capteur de température de fluide (30a) détectant une température d'un fluide fourni à l'actionneur de changement de rapport (3), dudit capteur de vitesse de véhicule (26) et dudit capteur de position de transmission (28, 29), de manière à diminuer la pression de fluide fournie audit actionneur de changement de rapport (3) quand un rapport plus élevé de transmission, une valeur plus élevée de vitesse du véhicule ou une température plus élevée de fluide est détecté.

2. Transmission à commande électronique selon la revendication 1,
caractérisée en ce que
ledit dispositif électronique de commande (5) est relié audit capteur d'accélérateur (24).

3. Transmission à commande électronique selon la revendication 1 ou 2,
caractérisée en ce que
ledit dispositif électronique de commande (5) est relié audit capteur de vitesse de rotation de moteur (25).

4. Transmission à commande électronique selon au moins l'une des revendications précédentes,
caractérisée en ce que
ledit dispositif électronique de commande (5) est relié audit capteur de vitesse de véhicule (26).

5. Transmission à commande électronique selon au moins l'une des revendications précédentes,
caractérisée en ce que
ledit dispositif électronique de commande (5) est relié à un capteur d'embrayage (27).

6. Transmission à commande électronique selon au moins l'une des revendications précédentes,
caractérisée en ce que
ledit dispositif électronique de commande (5) est relié audit capteur de température de fluide (30a).

7. Transmission à commande électronique selon au moins l'une des revendications précédentes,
caractérisée en ce que
ledit dispositif électronique de commande (5) est relié à un capteur de vitesse de rotation (25a).

8. Transmission à commande électronique selon au moins l'une des revendications précédentes,
caractérisée en ce que
ledit dispositif électronique de commande (5) est relié à un capteur (30b) pour détecter l'inclinaison entre les portions avant et arrière d'une carrosserie de véhicule.

9. Transmission à commande électronique selon au moins l'une des revendications précédentes,
caractérisée en ce que
le courant d'excitation de l'enroulement électromagnétique de ladite vanne de commande de pression (21) est régulé.

10. Transmission à commande électronique selon au moins l'une des revendications précédentes,
caractérisée en ce que
la force d'entraînement dudit actionneur de changement de rapport (3) est corrigée en fonction des conditions détectées d'exploitation.
